# EUROPEAN PATENT APPLICATION

(11) **EP 4 464 992 A1**
(43) Date of publication of application: **20.11.2024**
(21) Application number: 24174223.8
(22) Date of filing: 03.05.2024
(51) Int. Cl.: G01F 15/12, G01F 15/14, G01F 3/08

(54) **MEASURING DEVICE FOR A LIQUID METER AND METER COMPRISING SUCH A MEASURING DEVICE**

(30) Priority: 16.05.2023 FR 2304849
(71) Applicant: DIEHL METERING SAS, 68304 Saint Louis (FR)
(72) Inventor: Denner, Bruno, 68400 Riedisheim (FR)
(74) Representative: Diehl Patentabteilung

(57) **Abstract**

The invention relates to a measuring device (1) for a liquid meter comprising a hollow body (3) delimiting a chamber (3') with an inlet opening and an outlet opening for the liquid to be measured, a measuring member (5) which is movably mounted in said chamber (3') and which is subjected to the action of the liquid passing through said chamber, and a filtration element (6) which is arranged and configured to be passed through by the liquid in circulation in the region of at least one filtering zone (9') before its entry into the chamber (3').

Measuring device (1), characterized in that it comprises at least one decelerated circulation zone for the liquid which is located upstream of the inlet opening, on the one hand, and upstream and/or downstream of an associated filtering zone (9') of the filtration element (6), on the other hand, and in that it also comprises, associated with said or each decelerated circulation zone, a stable deposit zone (8) for at least specific particles transported by the flow of liquid and removed therefrom by the action of gravity.

## Description

The invention relates to the field of devices passed through by a flow of liquid which is capable of transporting solid particles, for example liquid meters, and relates in particular to the field of volumetric meters (for example for water). The invention is used, not exclusively but particularly advantageously, in liquid meters which comprise a measuring device using an oscillating piston as the measuring member (see for example EP 0 681 163 B1).

A liquid in circulation, in particular when it is water distributed in a network, often carries solid particles, in particular mineral and silica-based (sand) or even metal-based (rust) particles, which can be very damaging to the devices and apparatuses which it passes through from the distribution network. This is particularly the case for meters, in particular when they are equipped with mobile measuring members (and this results in: accelerated wear, reduced accuracy and reliability of measurement, possible blockage of the member) but also more generally for all devices and apparatuses located downstream of the meter and supplied with liquid thereby.

A simple solution to remedy this drawback consists in putting in place a filter which is integrated, in particular, in the measuring device of a meter and which is located upstream of its measuring member and which blocks the particles and other undesirable solid substances present in the flow of liquid passing through.

However, such a filter often becomes rapidly and prematurely clogged up, in particular in the case of filters comprising very small pores, and thus it is necessary to carry out cleaning, or even a replacement, of said filter, with intervention on site and cutting off the supply.

In order to remedy this drawback resulting from the use of a filter, which nevertheless permits the meter to be protected, it has been proposed by the applicant to provide in the meter two circulation paths having liquid filtration levels of varying intensity, these paths being arranged in parallel. This known solution is described in the documents FR 3 096 132 B1 and WO 2020/233981 A1.

More particularly, the subject of these two documents is a measuring device for a liquid meter, in particular of the volumetric or oscillating piston type, comprising:
- a hollow body having a base, a cover and a lateral wall which delimit a chamber with an inlet opening and an outlet opening for the liquid to be measured,
- a measuring member, for example an oscillating piston, which is movably mounted in said chamber and which is subjected to the action of the liquid passing through said chamber, and
- a filtration element which is arranged and configured to be passed through by the liquid before entering into the chamber via the corresponding opening, this filtering element having a first filtering zone and at least one second filtering zone with different levels or degrees of filtration, for example different sizes of pores or through-openings, the or each second filtering zone carrying out a coarser filtration than the first filtering zone.

Although this solution is satisfactory in terms of the degree of filtering selectivity, continuity of service and operating period without intervention, the fact remains that once the high-level first filtering zone (fine and selective filtering) is obstructed, the majority, if not all, of the liquid will be subjected to a less efficient filtration (coarser) by means of the second filtering zone which allows larger particles to pass through and, in particular, the measuring member will be exposed once again to their damaging effects. Moreover, even when the most selective zone is not, or not particularly, blocked, a portion of the flow of liquid which is potentially loaded with particles still passes through said second filtering zone and is not finely filtered.

The principal object of the present invention is to remedy these limitations, in particular but not limited to the type of meter targeted above, and to propose a solution which is simple and effective and which enables, preferably permanently, a protection to be ensured relative to the particles carried by a liquid for the apparatuses and devices arranged downstream of a meter passed through by this liquid, but also for the measuring member of this meter. The proposed solution should not require an additional element and can be easily integrated into the meter.

To this end, the subject of the invention is a measuring device for a liquid meter comprising, advantageously housed in a protective casing:
- a hollow body delimiting a chamber with an inlet opening and an outlet opening for the liquid to be measured,
- a measuring member which is movably mounted in said chamber and which is subjected to the action of the liquid passing through said chamber,
- a filtration element which is arranged and configured to be passed through by the liquid in circulation in the region of at least one filtering zone before its entry into the chamber through the corresponding opening,
measuring device, characterized in that it comprises at least one decelerated circulation zone for the liquid which is located upstream of the inlet opening, on the one hand, and upstream and/or downstream of an associated filtering zone of the filtration element, on the other hand, and in that it also comprises, associated with said or each decelerated circulation zone, a stable deposit zone for at least specific particles transported by the flow of liquid and removed therefrom by the action of gravity.

The invention will be better understood by way of the following description which relates to a preferred embodiment which is provided by way of non-limiting example and which is explained with reference to the accompanying schematic drawings, in which:
[Fig. 1] and
[Fig. 1B] are perspective views in the assembled state and in the exploded state of the constituent elements of a measuring device according to the invention with a measuring member of the oscillating piston type;
[Fig. 2A] is a sectional view of a measuring device according to the invention with its protective casing in which the constituent elements shown in Figures 1 and 1B are mounted and which also incorporates the end pieces for the fluidic connection for the circulation of the liquid to be measured (the sectional plane encloses the axes of said end pieces).
[Fig. 2B] and
[Fig. 2C] are sectional views along A-A respectively in elevation and in perspective of the measuring device of Figure 2A;
[Fig. 3A]

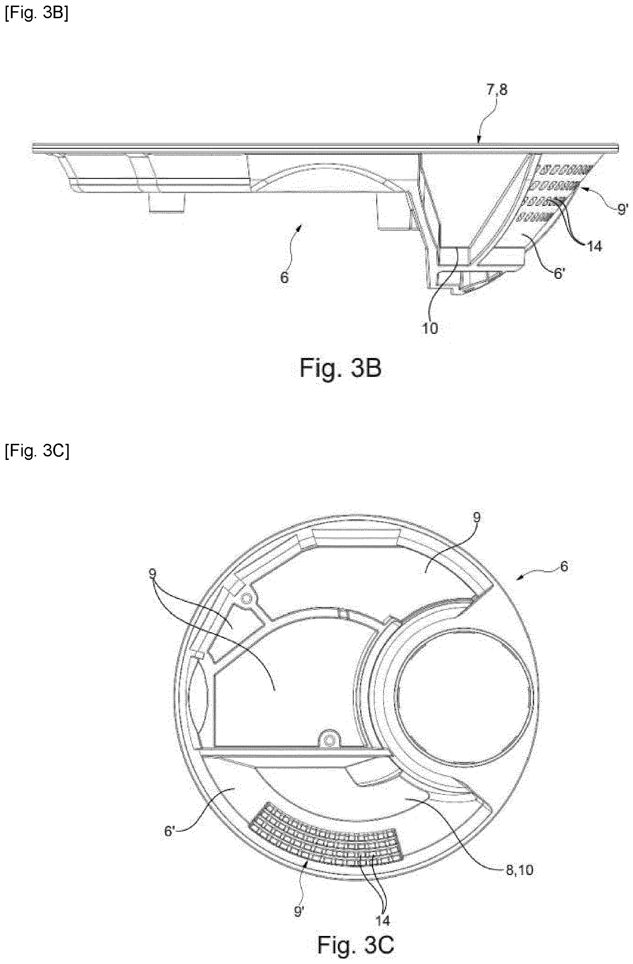

[Fig. 3B] and

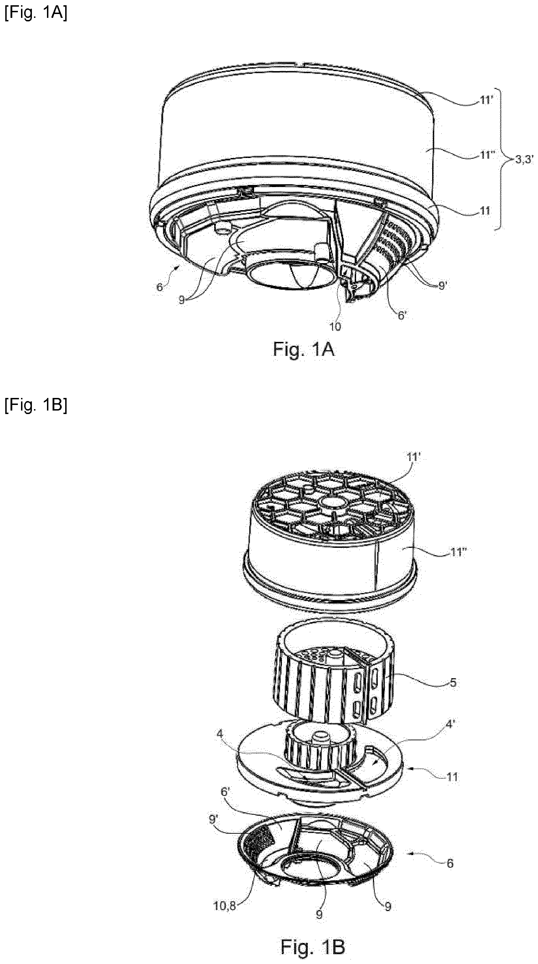

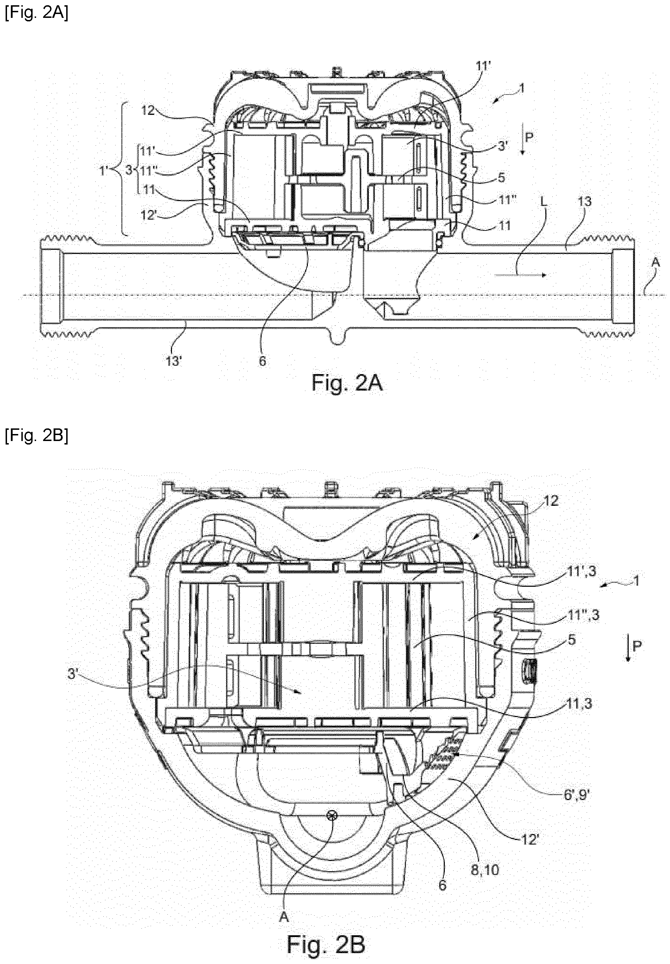

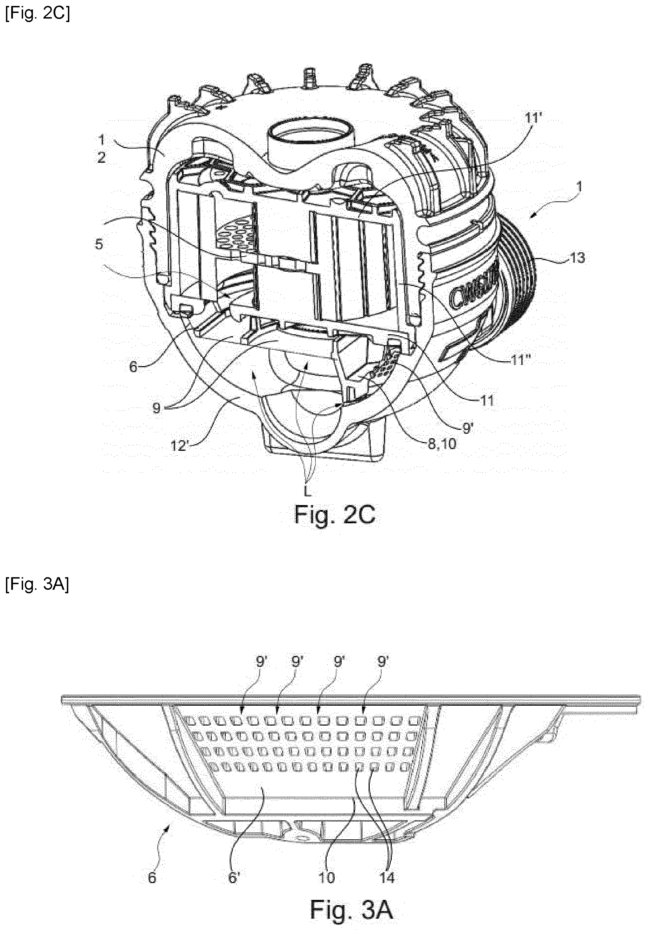

[Fig. 3C] are views in elevation (in two different directions) and from above of the filtration element forming part of the constituent elements of the measuring device shown in Figures 1 and 2;
[Fig. 4A]

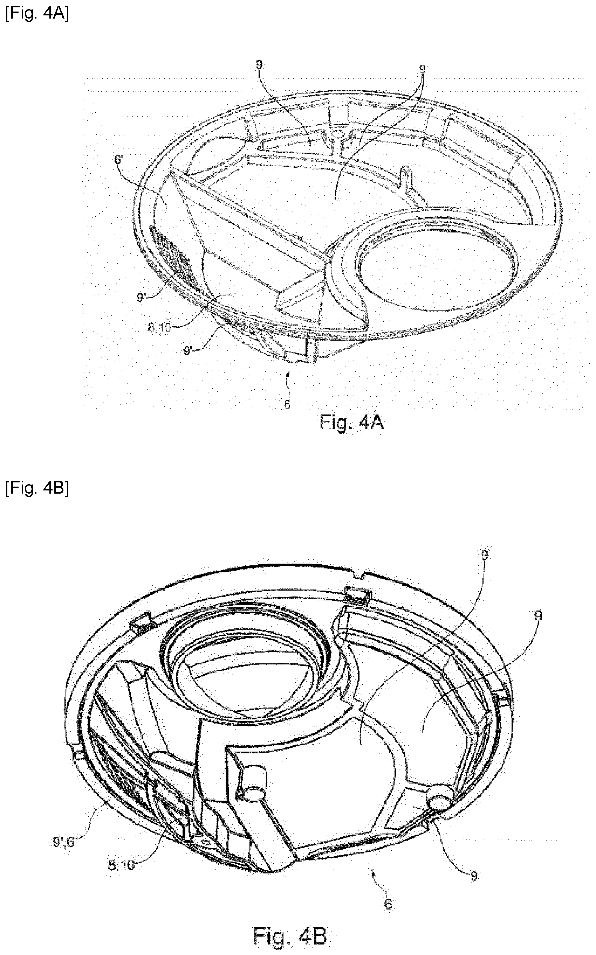

[Fig. 4B] and

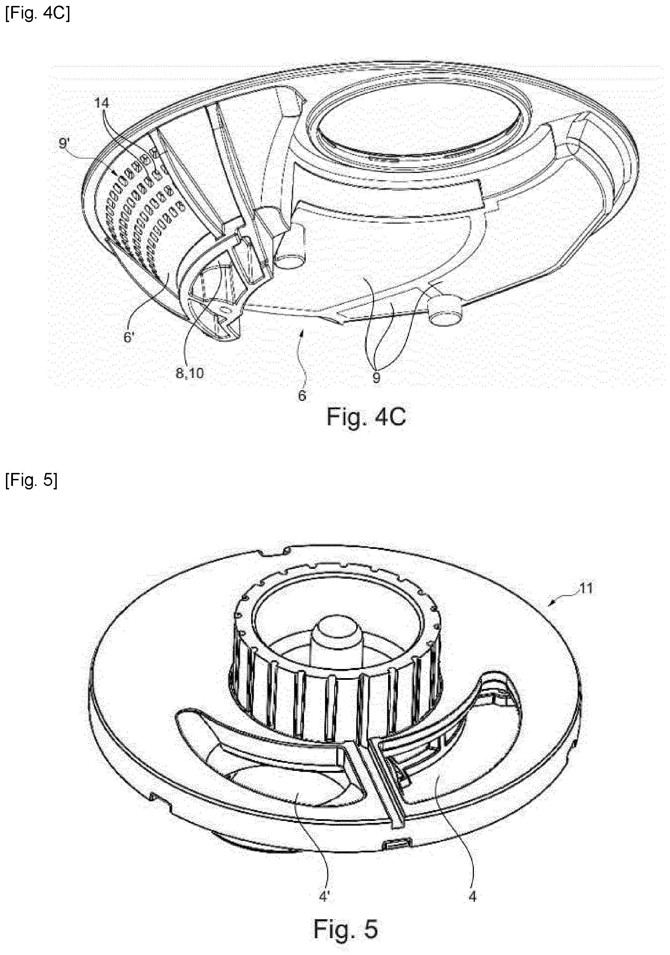

[Fig. 4C] are views in perspective in different directions of the filtration element shown in Figures 3A and 3B;
[Fig. 5] is a view in perspective of the element forming the base of the hollow body of the measuring device shown in Figures 1 and 2 and which is assembled with the filtration element;

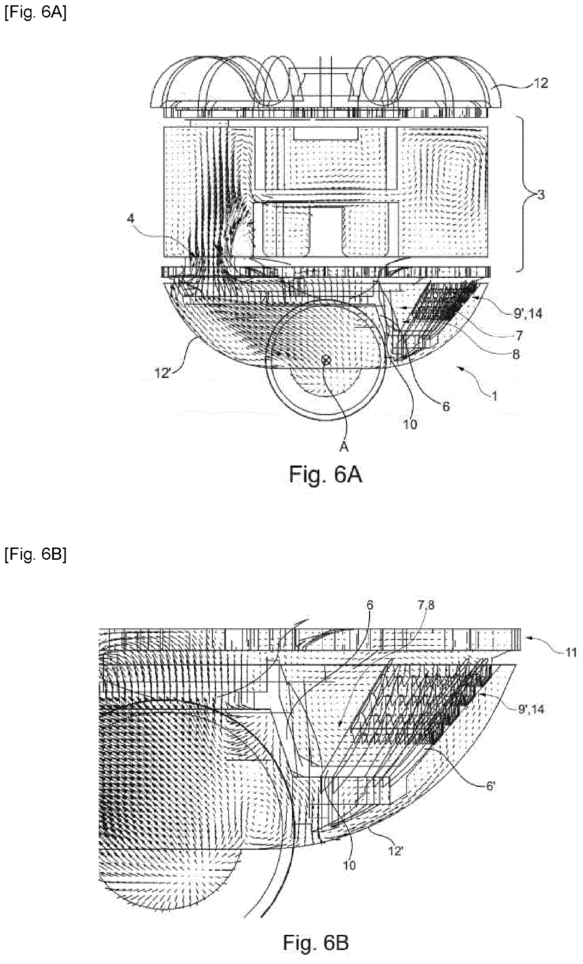

[Fig. 6A] is a transparent view of the measuring device, shown in Figures 2A, 2B and 2C, in a direction perpendicular to the plane of Figure 2B and illustrating schematically the flow of liquid to be measured circulating in the measuring device, in particular the two circulation paths taken by the liquid as a function of the filtering zone passed through (fine or coarse).
[Fig. 6B] is a partial view at a different scale of a part of the object shown in Figure 6A, enabling the coarse filtering zone and the decelerated circulation zone to be more clearly identified and

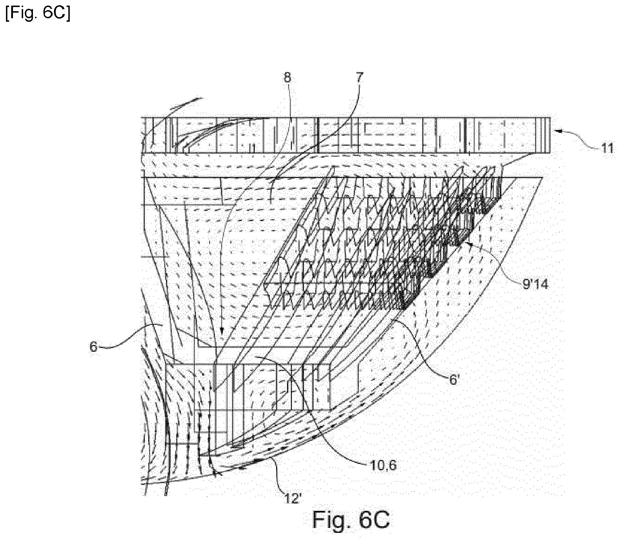

[Fig. 6C] is a detailed view, at a different scale again, of a part of the object shown in Figure 6B, showing merely the coarse filtering zone and the decelerated circulation zone.

Figures 1, 2 and 6 illustrate a measuring device (1) for a liquid meter comprising, advantageously housed in a protective casing (1'):
- a hollow body (3) delimiting a chamber (3') with an inlet opening (4) and an outlet opening (4') for the liquid (L) to be measured,
- a measuring member (5) which is movably mounted in said chamber (3') and which is subjected to the action of the liquid (L) passing through said chamber,
- a filtration element (6) which is arranged and configured to be passed through by the liquid (L) in circulation in the region of at least one filtering zone (9, 9') before its entry into the chamber (3') through the corresponding opening (4).

The aforementioned constituent elements (3, 5, 6) of the measuring device (1), the hollow body (3) thereof being in turn advantageously formed by the assembly of at least two parts (11, 11', 11"), are able for example to be housed and held assembled, possibly under pressure, in a protective casing (1') as shown by way of example in Figures 2A, 2B and 2C. This protective casing consists, for example, of two shell parts (12 and 12') which are assembled in a sealed manner, for example by screwing, the lower shell (12') being able to be formed in one piece with the end pieces (13, 13') for supplying and discharging the liquid (L) to be measured. It can be noted in relation to Figures 6A, 6B and 6C that at least the lower shell (12') participates in the guidance of the flow of liquid (L), in particular in cooperation with the filtration element (6) with which it forms the supply chambers of the filtering zones (9, 9'). Moreover, in the embodiment shown in Figures 2 and 6, the measuring device (1) has an arrangement along a vertical axis which in this embodiment has to coincide with the direction of gravity (P) when the meter comprising said measuring device (not shown) is installed on site. In this arrangement, the filtration element (6) which has an overall cup shape is attached and held assembled under pressure below the hollow body (3) by the lower shell (12').

According to the invention, the measuring device (1) comprises i) at least one decelerated circulation zone (7) for the liquid (L) which is located upstream of the inlet opening (4), on the one hand, and upstream and/or downstream of an associated filtering zone (9, 9') of the filtration element (6), on the other hand, and ii) also associated with said or each decelerated circulation zone (7), a stable deposit zone (8) for at least specific particles transported by the flow of liquid (L) and removed therefrom by the action of gravity.

Due to these arrangements, and as a function of the particular configuration of the installation of the twin zones comprising the decelerated circulation zone (7) and the deposit zone for the removed particles (8), the particles which are transported and have passed through (installation of zones 7, 8 downstream of the one or more zones 9, 9') or which are capable of passing through an associated filtering zone (9, 9') (installation of zones 7, 8 upstream of the one or more zones 9, 9') and which meet certain criteria of size and mass/size ratio, are automatically ejected from the flow of liquid (L) in the region of decelerated circulation (7) by the action of their own weight, and accumulate in the region of the deposit zone (8). The person skilled in the art understands, in particular when viewing Figures 6A, 6B and 6C, that the decelerated circulation zone (7) corresponds to a spatial region filled with liquid and created by the particular local conditions (in terms of fluid dynamics) generated by the combination of the liquid in circulation (L) with the surrounding physical configuration (significant increase in the passage cross section downstream and upstream of the smaller passage cross sections). The person skilled in the art also understands that the stable deposit zone (8) corresponds to a material surface sheltered from any flow of liquid (L) which might entrain the deposited particles to a sufficient extent that they are removed from said deposit zone (8).

As indicated above, different arrangements and configurations are possible with one or more filtering zones (9, 9'), at least one, some or each thereof being able to be provided with a pair of twin zones (located upstream or downstream) or two pairs of twin zones (located respectively upstream and downstream).

According to a preferred embodiment, however, seen in the accompanying drawings, the or each decelerated circulation zone (7) is at least substantially, preferably entirely, located on the most direct path or the shortest path between the filtering zone (9') which is associated therewith and the inlet opening (4) of the chamber (3'), preferably immediately downstream of said filtering zone (9') in the direction of circulation, this relatively subjacent arrangement being considered in the direction of the force of gravity (P) or vertical direction.

According to a practical structural variant seen in the figures, the filtration element (6) comprises at least two filtering zones (9 and 9') passed through by the liquid (L) in circulation, namely a first filtering zone (9) and at least one second filtering zone (9').

Preferably, these first and second zones (9, 9') have different levels of effectiveness or selectivity in terms of filtration, for example different sizes of pores or through-openings (14), and the or a decelerated circulation zone (7) and its associated stable deposit zone (8) are arranged immediately downstream of the or each second filtering zone (9') implementing a filtration which is coarser or less selective than a first filtering zone (9).

Thus due to its association with at least one pair of twin zones (7 and 8), a second coarser filtering zone (9') can increase its effectiveness in terms of filtration and in particular come closer to that of the first filtering zone (9) which is more efficient. It is also understood that said first filtering zone (9), which can be dimensioned to provide in normal use virtually all of the filtration of the measuring device (1), clearly becomes clogged first. If this is the case, virtually all of the flow of liquid (L) passes through the one or more second filtering zones (9') and the presence of the twin zones (7 and 8) thus makes it possible at least to limit, or even avoid, the negative effects of the solid particles normally stopped by the first filtering zone but passing through the second filtering zone (by their removal from the flow and their sedimentation).

In order to ensure a passage of liquid (L) predominantly through the first filtering zone (9) in normal day-to-day operation of the measuring device (1), the or each aforementioned second filtering zone (9') is located at a greater distance from the inlet opening (4) of the chamber (3') than the first filtering zone (9), preferably at the furthest distance possible from this opening (4), taking into account in particular their respective locations and the overall design of the measuring device (1). Moreover, these one or more second filtering zones (9') advantageously have a combined passage cross section and/or a surface extent significantly smaller than that/those of the first filtering zone (9).

Relative to an installation on site recommended for the measuring device and according to an advantageous structural feature of the invention, it is provided that the or each decelerated circulation zone (7) is substantially, or even entirely, formed in the filtration element (6) and is delimited in the lower part, considered in the direction of the force of gravity (P) or vertical direction, by a wall portion (10) of the filtration element (6) defining a gravity collector with a stable deposit zone (8) in the bottom.

According to a further structural feature which is simple and effective for the practical operation of the principle of the invention, the filtration element (6) has pores or openings (14) in the region of the or each filtering zone (9'), located upstream of a decelerated circulation zone (7), the orientations of through-passages thereof being such that the flow of liquid (L) passing through the through-passages is directed to the inlet opening (4) of the chamber (3'), substantially avoiding the decelerated circulation zone (7) and advantageously passing tangentially above this zone (7) under consideration.

As Figures 1B, 3 and 4 show and according to a construction of the filtration element (6) which is practical and compact, and which is simple to produce and provides the possibility of arranging large surface areas for the filtering zones (9, 9'), the filtration element (6) is a cup-shaped part. In this context, the or each filtering zone (9') is advantageously located immediately upstream of and associated with a decelerated circulation zone (7) and preferably shaped or attached in a curved lateral wall portion (6') of this cup.

Relative to an embodiment of the device (1) having the aforementioned advantages, the filtration element (6) is preferably a filtration element (6) with two different levels or degrees of filtration in parallel and comprises a first filtering zone (9) with finer filtration and a single second filtering zone (9') with coarser filtration, arranged side-by-side in said filtration element (6).

Still according to the aforementioned possible practical embodiment, it can also be provided that the first filtering zone (9) corresponds to an attached filtering membrane and the second filtering zone (9') corresponds to a perforated wall zone (6') of the filtration element (6).

As Figures 1, 2 and 6 show, and according to a possible practical construction of the measuring device (1), the hollow body (3) delimiting the chamber (3'), in which the measuring member (5) is mounted, has a base (11), a cover (1 1') and a lateral wall (11"). The lateral wall can possibly be formed in one piece with the base or the cover.

According to a first variant seen in the figures, in particular Figures 1B and 2, the filtration element (6) can be a separate element which is attached on the outside in the region of the base (11) or the cover (11') as a function of the location of the inlet opening (4) of the chamber (3').

According to a second variant, not shown, the filtration element (6) can be integrated in or formed by the base (11) or cover (11') as a function of the location of the inlet opening (4) of the chamber (3').

In the embodiment of the device seen in Figures 1B, 2 and 6A, the measuring member (5) consists of an oscillating piston.

A further subject of the invention is also a liquid meter (not shown), in particular a volumetric water meter, characterized in that it comprises a measuring device (1) as described above.

Naturally, the invention is not limited to the embodiment described and shown in the accompanying drawings. Modifications are possible, in particular, from the point of view of the constitution of the various elements or by the substitution of technical equivalents without departing from the protective field of the invention.

## Claims

1. Measuring device (1) for a liquid meter comprising, advantageously housed in a protective casing (1'):
- a hollow body (3) delimiting a chamber (3') with an inlet opening (4) and an outlet opening (4') for the liquid (L) to be measured,
- a measuring member (5) which is movably mounted in said chamber (3') and which is subjected to the action of the liquid (L) passing through said chamber,
- a filtration element (6) which is arranged and configured to be passed through by the liquid (L) in circulation in the region of at least one filtering zone (9, 9') before its entry into the chamber (3') through the corresponding opening (4),
measuring device (1), **characterized in that** it comprises at least one decelerated circulation zone (7) for the liquid (L) which is located upstream of the inlet opening (4), on the one hand, and upstream and/or downstream of an associated filtering zone (9, 9') of the filtration element (6), on the other hand, and **in that** it also comprises, associated with said or each decelerated circulation zone (7), a stable deposit zone (8) for at least specific particles transported by the flow of liquid (L) and removed therefrom by the action of gravity.

2. Measuring device (1) according to Claim 1, **characterized in that** the or each decelerated circulation zone (7) is at least substantially, preferably entirely, located on the most direct path or the shortest path between the filtering zone (9') which is associated therewith and the inlet opening (4) of the chamber (3'), preferably immediately downstream of said filtering zone (9') in the direction of circulation, this relatively adjacent situation being considered in the direction of the force of gravity or vertical direction.

3. Measuring device (1) according to Claim 1 or 2, **characterized in that** the filtration element (6) comprises at least two filtering zones (9 and 9') passed through by the liquid (L) in circulation, namely a first filtering zone (9) and at least one second filtering zone (9'), **in that** these first and second zones (9, 9') have different levels of effectiveness or selectivity in terms of filtration, for example different sizes of pores or through-openings (14), and **in that** the or a decelerated circulation zone (7) and its associated stable deposit zone (8) are arranged immediately downstream of the or each second filtering zone (9') implementing a filtration which is coarser or less selective than a first filtering zone (9).

4. Measuring device (1) according to Claim 3, **characterized in that** the or each aforementioned second filtering zone (9') is located at a greater distance from the inlet opening (4) of the chamber (3') than the first filtering zone (9), preferably at the furthest distance possible from this opening (4) and advantageously has a combined passage cross section and/or a surface extent significantly smaller than that of the first filtering zone (9).

5. Measuring device (1) according to any one of Claims 1 to 4, **characterized in that** the or each decelerated circulation zone (7) is substantially, or even entirely, formed in the filtration element (6) and is delimited in the lower part, considered in the direction of the force of gravity or vertical direction, by a wall portion (10) of the filtration element (6) defining a gravity collector with a stable deposit zone (8) in the bottom.

6. Measuring device (1) according to any one of Claims 1 to 5, **characterized in that** the filtration element (6) has pores or openings (11) in the region of the or each filtering zone (9'), located upstream of a decelerated circulation zone (7), the orientations of the through-passages thereof being such that the flow of liquid (L) passing through is directed to the inlet opening (4) of the chamber (3'), substantially avoiding the decelerated circulation zone (7) and advantageously passing tangentially above this zone (7) under consideration.

7. Measuring device (1) according to any one of Claims 1 to 6, **characterized in that** the filtration element (6) is a cup-shaped part, the or each filtering zone (9') being advantageously located immediately upstream of and associated with a decelerated circulation zone (7) and preferably shaped or attached in a curved lateral wall portion (6') of this cup.

8. Measuring device (1) according to any one of Claims 1 to 7, **characterized in that** the filtration element (6) is a filtration element (6) with two different levels or degrees of filtration in parallel and comprises a first filtering zone (9) with a finer filtration and a single second filtering zone (9') with a coarser filtration, arranged side-by-side in said filtration element (6).

9. Measuring device (1) according to Claim 8, **characterized in that** the first filtering zone (9) corresponds to an attached filtering membrane and **in that** the second filtering zone (9') corresponds to a perforated wall zone (6') of the filtration element (6).

10. Measuring device (1) according to any one of Claims 1 to 9, **characterized in that** the hollow body (3) delimiting the chamber (3'), in which the measuring member (5) is mounted, has a base (11), a cover (11') and a lateral wall (11"), the filtration element (6) being a separate element which is attached on the outside in the region of the base (11) or the cover (11') as a function of the location of the inlet opening (4) of the chamber (3').

11. Measuring device (1) according to any one of Claims 1 to 9, **characterized in that** the hollow body (3) delimiting the chamber (3'), in which the measuring member (5) is mounted, has a base (11), a cover (11') and a lateral wall (11"), the filtration element (6) being integrated in or formed by the base (11) or cover (11') as a function of the location of the inlet opening (4) of the chamber (3').

12. Measuring device (1) according to any one of Claims 1 to 11, **characterized in that** the measuring member (5) consists of an oscillating piston.

13. Liquid meter, in particular volumetric water meter, **characterized in that** it comprises a measuring device (1) according to any one of Claims 1 to 12.
